# EUROPÄISCHE PATENTSCHRIFT

(11) **EP 2 041 444 B1**
(45) Veröffentlichungstag und Bekanntmachung des Hinweises auf die Patenterteilung: **16.12.2009**
(21) Anmeldenummer: 07765021.6
(22) Anmeldetag: 03.07.2007
(51) Int. Cl.: F16D 25/0638

(54) **DRUCKÖLKUPPLUNG**
HYDRAULICALLY-ACTUATED CLUTCH
EMBRAYAGE À HUILE HYDRAULIQUE

(30) Priorität: 07.07.2006 DE 102006031815
(43) Veröffentlichungstag der Anmeldung: 01.04.2009
(73) Patentinhaber: Ortlinghaus-Werke GmbH, 42929 Wermelskirchen (DE)
(72) Erfinder: ALBRECHT, Markus, 40489 Düsseldorf (DE)
(74) Vertreter: Füssel, Michael
(86) Internationale Anmeldenummer: PCT/EP2007/005874
(87) Internationale Veröffentlichungsnummer: WO 2008/003459

(56) Entgegenhaltungen:
- DE-A1- 3 517 144
- DE-A1- 3 545 842
- US-A1- 2004 206 597
- US-B1- 6 508 337
- US-B1- 6 920 970

## Beschreibung

Die vorliegende Erfindung betrifft eine Druckölkupplung nach dem Oberbegriff des Hauptanspruchs.

Die US 2004/0206597 A1 offenbart einen hydraulischen Kupplungs/Bremsmechanismus der so ausgelegt ist, dass ein sanfter Kupplungs/Bremseingriff erfolgt. Der Mechanismus umfasst ein Gehäuse in dem erste und zweite Momentübermittlungselemente, ein Flüssigkeitseinlass, eine Kolbenbohrung, welche mit dem Flüssigkeitseinlass kommuniziert, und eine Lamellenkammer aufweist, wobei die Lamellenkammer benachbart zur Kolbenbohrung angeordnet ist. In der Lamellenkammer sind eine Mehrzahl von Lamellen angeordnet, von denen ein Teil mit dem ersten Momentübermittlungselement und ein anderer Teil mit dem zweiten Momentübermittlungselement verbunden sind. Ein Kolben ist gleitend in der Kolbenbohrung aufgenommen, wobei der Kolben eine erste Seite aufweist, die mit dem Flüssigkeitseinlass in Verbindung steht, wobei die dazu gegenüberliegende zweite Seite benachbart zu den Lamellen angeordnet ist. Dem Kolben ist eine Dämpfungsvorrichtung zugeordnet, um die Bewegung des Kolbens relativ zu den Lamellen zu dämpfen.

Die US 6,920,970 B1 offenbart eine Hochleistungskupplung zur Verwendung in einem Powerglidegetriebe. Ein herkömmliche Kupplung ist in einer modifizierten Kupplungstrommel angeordnet, welche gewichtsreduzierende Merkmale zur Aufnahme eines modifizierten Kupplungspaketes hat, wobei das Kupplungspaket zehn Reibscheiben und elf Stahlscheiben aufweist, welche eine 150%ige Steigerung der Oberflächenkontaktbereiche und der Haltekräfte im Vergleich zu einem original Powerglidekupplungspaket aufweist, welches lediglich vier Reibscheiben und fünf Stahlscheiben aufweist. Das Kupplungspaket wird mittels einem modifizierten Kolben betätigt, welcher einen an die höhere Anzahl von Reibscheiben angepassten, gesteigerten Hub aufweist um die maximale Haltekraft bei minimaler Steigerung der Rotationsmasse zur Verfügung zu stellen.

Die US 6,508,337 B1 betrifft eine Kupplung, welche Zwischenscheiben und Reibscheiben aufweist. Die Zwischenscheiben weisen Federn auf, um ein sequentielles Eingreifen der Reibscheiben und/oder ein graduelles Eingreifen der Reibscheiben zu bewirken, indem eine der Zwischenscheiben während des initialen Kupplungseingriffs angetippt wird. Damit soll eine Kupplung zur Verfügung gestellt werden, welche ein kontrolliertes, graduelles Eingreifen der Kupplung in einer relativ kurzen Zeit erlaubt.

Derartige Druckölkupplung der Eingangs genannten Art ist bekannt, siehe z.B. www.ortlinghaus.de.

Eine derartige Kupplung dient zur Übertragung sehr hoher Drehmomente.

Zu diesem Zweck wird das Lamellenpaket hydraulisch zusammengepresst, um die erforderlichen Reibkräfte an den im Eingriff befindlichen Lamellen zu erzeugen.

Beim Betätigen der Kupplung unter Differenzdrehzahl zwischen dem Antrieb und der Abtriebsseite entsteht teils erhebliche Reibenergie, die zu einer thermisch hohen Belastung der am Reibvorgang beteiligten Lamellen führt.

Um hohe thermische Belastungen zulassen zu können, strebt man eine große Reibfläche der Kupplungsscheiben an.

Diesem Bestreben sind allerdings bei den herkömmlichen Bauweisen derartiger Druckölkupplungen bislang Grenzen gesetzt, weil das Federpaket innerhalb des Innendurchmessers des Lamellenpakets untergebracht ist.

Es ist folglich Aufgabe der vorliegenden Erfindung, die bekannte Bauweise der Druckölkupplungen so zu verbessern, dass bei unverändert sicherer Betriebsweise die zu übertragenden Drehmomente und die thermische Leistungsfähigkeit größer werden können.

Diese Aufgabe löst die Erfindung mit den Merkmalen des Hauptanspruchs.

Aus der Erfindung ergibt sich der Vorteil, daß praktisch die gesamte Querschnittsfläche des Innenmitnehmers für die Drehmomentübertragung zur Verfügung gestellt wird.

Dieser Vorteil wird dadurch erreicht, daß der Innenmitnehmer selbst keinerlei Längsbohrungen oder ähnliches aufweisen muß, um die einzelnen Federn des Federpakets aufzunehmen.

Das Federpaket gemäß vorliegender Erfindung ist nämlich im Längsbereich des Innenmitnehmers zwischen der zum Einrücken der Kupplung vorgesehenen Kolben-Zylinder-Einheit und der ersten Lamelle des Lamellenpakets angeordnet und stützt sich - bildlich gesprochen - zwischen einer Abstützfläche am Kolben der Kolben-Zylinder-Einheit und einer Abstützfläche an dem Innenmitnehmer unter Vorspannung ab.

Aus der Erfindung ergibt sich der Vorteil, daß unter Beibehaltung einer im Außendurchmesser kompakten Lösung trotzdem eine große Reibfläche zur Verfügung gestellt wird, indem der Innendurchmesser verkleinert werden kann.

Somit steht der gesamte Querschnitt des Innenmitnehmers bis zu dessen Außendurchmesser, wo sich die einzelnen Lamellen des Lamellenpakets mit ihrem Innendurchmesser im Eingriff befinden, für die Drehmomentübertragung zur Verfügung.

Dieser Bauraum stand bisher nicht zur Verfügung und war darüberhinaus durch das dort befindliche Federpaket geschwächt.

Zugleich wird eine große Mitnahmebohrung am Innenmitnehmer ermöglicht.

Insofern bedeutet die Erfindung insbesondere im Hinblick auf Schiffskupplungen, die zwischen der Maschine und dem Propeller sitzen und die hohe Drehmomente übertragen müssen, eine erhebliche Verbesserung ohne daß von der bewährten Funktionsweise abgewichen werden muß, wonach die Druckölkupplung hydraulisch eingerückt und unter Federkraft ausgerückt wird.

Der Federraum für das Federpaket liegt also im axialen Längsbereich zwischen Lamellenpaket und Kolben-Zylinder-Einheit.

Durch die Anordnung des Federpakets dort können auf einfache Weise zwei Einspannflächen generiert werden, an denen sich das Federpaket über den Umfang verteilt abstützen kann.

Wird darüber hinaus das Federpaket axial vorgespannt, läßt sich der Kolben der Kolben-Zylinder-Einheit bei der Ausrückbewegung bis in seine Grundstellung zurückfahren, die er aufgrund der Federvorspannung sicher erreicht.

Von besonderem Vorteil ist eine Weiterbildung, bei welcher der Kolben der Kolben-Zylinder-Einheit in einer Radialebene geteilt ist. Es lassen sich auf diese Weise nämlich zwei gegeneinander spannbare Einspannflächen für das Federpaket am Kolben erzeugen, zwischen welche das Federpaket eingelegt wird um es anschließend durch Verschrauben der beiden getrennten Kolbenteile vorzuspannen.

Da sich das Federpaket an einem Innenbund desjenigen Kolbenteils abstützt, welches dem Lamellenpaket zugewandt ist, wird folglich das gesamte Federpaket am Kolben gefesselt, d.h., das Federpaket kann bei Verlagerung des Kolbens in die Einrückrichtung mit seinem dem Lamellenpaket zugewandten Ende an dem Innenmitnehmer abgestützt werden, vorzugsweise an einer Durchmesserstufe, und so beim Einrückvorgang der Kupplung gegen wachsende Federkraft vorgespannt werden.

Es kommt deshalb der Fesselung der Feder am Kolben der Kolben-Zylinder-Einheit besondere Bedeutung zu.

Die Fesselung der Feder kann zusätzlich über einen Ring erfolgen, der sich zwischen dem Fußbereich des Federpakets und dem Innenbund des anderen Kolbenteils abstützt und der innerhalb des Federraumes axial verschieblich ist.

Über diesen verschiebbaren Ring kann nämlich die Abstützgegenfläche des Innenmitnehmers, dessen Größtdurchmesser naturgemäß kleiner sein muß als der Kleinstdurchmesser des Innenbundes, ständig vom Federpaket beaufschlagt sein, wobei gleichzeitig die axiale Verschiebbarkeit des Kolbens gewährleistet ist.

Ergänzend wird vorgeschlagen, daß der Kolben zusammen mit dem Federpaket eine einbaufertige Baueinheit bilden soll mit darin befindlichem vorgespanntem Federpaket, welches einfach auf den Innenmitnehmer von derjenigen Seite aufgesteckt werden kann, auf welcher die Kolben-Zylinder-Einheit sitzt.

Im folgenden wird die Erfindung anhand eines Ausführungsbeispiels näher erläutert.

Es zeigt:

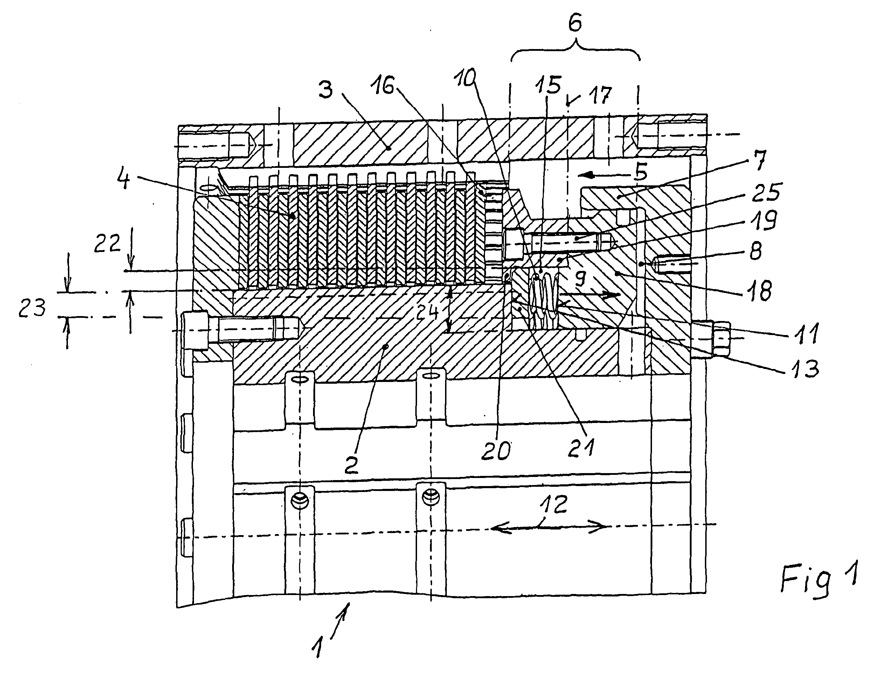

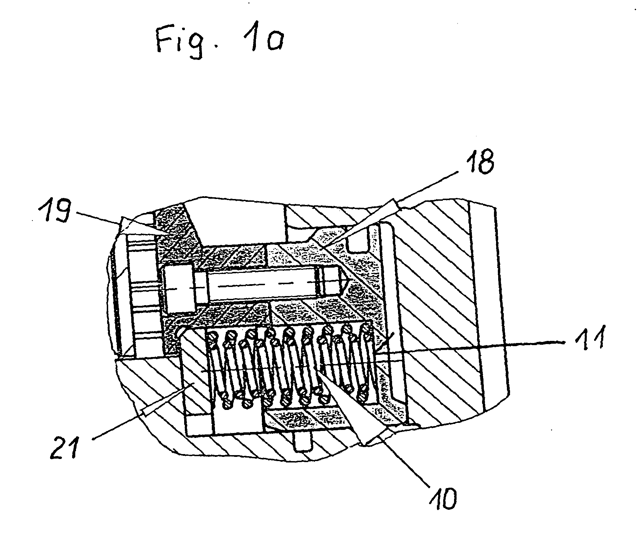

- Fig.1: ein erstes Ausführungsbeispiel der Erfindung
- Fig.la: Detailansicht zum Federpaket

Fig.1 zeigt im axialen Schnitt eine Druckölkupplung 1 nach vorliegender Erfindung.

Sofern im Folgenden nichts anderes gesagt wird, gilt die folgende Beschreibung stets für alle Figuren.

Ausgehend von einem Innenmitnehmer 2 sitzt ein Lamellenpaket 4 aus ringförmigen Kupplungslamellen zwischen einer Verzahnung auf dem Innenmitnehmer 2 und einer weiteren Verzahnung am Innendurchmesser des Kupplungsgehäuses 3.

Das Lamellenpaket 4 wird in der Einrückrichtung 5 von dem axialbeweglichen Kolben 6 einer Kolben-Zylinder-Einheit beaufschlagt und zur Übertragung des geforderten Drehmoments zwischen Innenmitnehmer 2 und Kupplungsgehäuse 3 zusammengepreßt.

Der Kolben 6 ist in dem mit dem Innenmitnehmer 2 mitrotierenden Zylinder 7 axial verschieblich geführt und wird - in an sich bekannter Weise - über eine Zentralbohrung in dem Innenmitnehmer 2 und entsprechende Radialkanäle mit Drucköl so beaufschlagt, daß er in Richtung zum Lamellenpaket 4 verlagert wird.

Dies geschieht durch Füllen des Druckraums 8 zwischen Kolben 6 und Zylinder 7 mit dem Drucköl.

Dabei wird das Federpaket 10 mit Verlagerung des Kolbens 6 in Einrückrichtung 5 zusammengepreßt.

Läßt nun der hydraulische Druck nach, wird das Federpaket 10 bestrebt sein, den Kolben 6 in Ausrückrichtung 9 zu verlagern, so daß der Reibschluß an den Kupplungslamellen des Lamellenpakets 4 aufgehoben wird.

Wesentlich ist nun, daß das Federpaket 10 im axialen Längsbereich zwischen der Kolben-Zylinder-Einheit und der ersten Lamelle des Lamellenpakets 4 vorgesehen ist.

Zu diesem Zweck wird in diesem axialen Längsbereich ein Federraum 15 gebildet, der sich zwischen einer dem Lamellenpaket 4 zugewandten Abstützfläche 11 des Kolbens 6 und einer in axialer Richtung 12 gegenüberliegenden Abstützgegenfläche 13 des Innenmitnehmers erstreckt. Dabei kann die Abstützfläche 11 auch von dem Bohrungsgrund entsprechend dimensionierter Federbohrungen 14 gebildet werden.

Dieser Sachverhalt ist in Fig. 1a dargestellt.

Der Federraum 15 befindet sich folglich ausschließlich auf lediglich einer Seite des Lamellenpakets 4, nämlich auf derjenigen Seite, wo die Kolben-Zylinder-Einheit aus Kolben 6 und Zylinder 7 angeordnet ist.

Dabei kann es, wie insbesondere die Figuren auch zeigen, zu einer relativ geringen Durchmesserverkleinerung des Innenmitnehmers kommen, weil der Federraum 15 ohne weiteres einen Größtdurchmesser aufweisen kann, der größer als der Kleinstdurchmesser des Lamellenpakets 4 ist.

Allein durch diese Maßnahme wird das übertragbare Drehmoment des Innenmitnehmers 2 vergrößert, weil der Querschnitt des Innenmitnehmers 2 nicht unnötig durch einen entsprechenden Federraum im axialen Längsbereich des Lamellenpakets geschwächt werden muß.

Diese Anordnung des Federraums 15 beruht daher auch auf der Überlegung, daß die Abstützgegenfläche 13, die Bestandteil des Innenmitnehmers 2 ist, zwischen dem Kolben 6 und der ersten Lamelle 16 des Lamellenpakets 4 vorgesehen ist.

Wie weiterhin die Figuren zeigen, ist der Kolben 6 in einer Radialebene 17 geteilt und die beiden Kolbenbestandteile sind miteinander verschraubt.

Da der vom Druckraum 8 beaufschlagte Bestandteil des geteilten Kolbens 6, hier als erstes Kolbenteil 18 bezeichnet, mit Druck beaufschlagt wird, muß an diesem ersten Kolbenteil 18 auch die Abstützfläche 11 für das Federpaket 10 vorgesehen sein.

Demgemäß trägt das zweite Kolbenteil 19 einen Innenbund 20, dessen Innendurchmesser kleiner als der Außendurchmesser des Federraums 15 ist, so daß sich das Federpaket 10 auf der axialen Innenseite des Innenbundes 20 abstützen kann.

Das Federpaket 10 ist folglich zwischen der Abstützfläche 11 und der axialen Innenseite, d.h. derjenigen Fläche des Innenbundes 20, welche dem Federraum 15 zugewandt ist, gefesselt und dort unter Vorspannung eingebracht.

Ergänzend hierzu sitzt ein axial verschiebbarer Ring 21 auf der dem Lamellenpaket 4 zugewandten Seite des Federraums 15. Der axial verschiebliche Ring 21 dient der Abstützung der Fußenden des Federpakets 10, d.h. derjenigen Enden, welche dem Lamellenpaket 4 zugewandt sind.

Man kann leicht nachvollziehen, daß mit Verlagerung des axial verschieblichen Rings 21 in Richtung zum Federraum 15 das Federpaket 10 zusammengepreßt wird unabhängig von der Position des Kolbens 6. Also wird auch mit Verlagerung des Kolbens 6 in Richtung zum Lamellenpaket das Federpakt zusammengepreßt während der Ring 21 in seiner Position verbleibt.

Dies wird dadurch erreicht, daß der axial verschiebliche Ring 21 mit einem äußeren Durchmesserbereich 22 am Innenbund 20 abgestützt ist, während er mit einem inneren Durchmesserbereich 23 an der Abstützgegenfläche 13 des Innenmitnehmers 2 anliegt.

Bei Verlagerung des Kolbens 6 durch Beaufschlagung des Durckraumes 8 mit Drucköl kann nun unter wachsender Spannung des Federpakets 10 das Lamellenpaket 4 zusammengepreßt werden, weil der Ring 21 innerhalb des Federraums 15 frei beweglich ist, so daß die Kupplung bestimmungsgemäß einrücken kann.

Wird dagegen der Druckraum 8 entlastet, rückt das Federpaket 10 den Kolben 6 in die Ausrückrichtung, so daß das Lamellenpaket entlastet wird und die Kupplung trennen kann.

Von wesentlicher Bedeutung ist daher auch, daß der Federraum 15 im Prinzip von zwei Teilräumen gebildet werden kann, von denen ein äußerer Ringraum Bestandteil des Kolbens 6 und ein innerer Ringraum Bestandteil des Innenmitnehmers 2 ist.

Beide radialen Erstreckungen addieren sich, so daß das Federpaket 10 teilweise in der Ausnehmung des Kolbens 6 und teilweise in der Ausnehmung des Innenmitnehmers 2 angeordnet ist.

Dabei kann die Durchmesserstufe 24 des Innenmitnehmers um dasjenige Maß größer werden, welches durch die entsprechend ringförmige Ausnehmung am Kolben 6 für den Federraum 15 bereitgestellt wird.

Die Schwächung des Innenmitnehmers 2 bleibt daher gering.

Darüber hinaus zeigt die Figur eine Weiterbildung, bei welcher der Kolben 6 zusammen mit dem Federpaket 10 eine einbaufertige Baueinheit mit vorgespanntem Federpaket 10 bildet.

Die beiden Kolbenteile 18 und 19 sind zu diesem Zweck mit Spannschrauben 25 gegeneinander verschraubt, wobei das innenliegende Federpaket 10 über den axial verschieblichen Ring 21 gefesselt ist, der sich in oben beschriebener Weise am Innenbund 20 abstützt.

Die so vormontierte Baueinheit kann leicht auf das freie Wellenende aufgesteckt werden, wobei sich dann das Federpaket 10 bereits in Vorspannung befindet.

Weiterhin ist mit dieser vormontierten Baueinheit ein sicherer einfacher Lamellenwechsel auch von der Kolbenseite möglich, ohne daß Federn herausfallen oder verloren gehen können.

### Bezugszeichenliste

- 1: Druckölkupplung
- 2: Innenmitnehmer
- 3: Kupplungsgehäuse
- 4: Lamellenpaket
- 5: Einrückrichtung
- 6: Kolben
- 7: Zylinder
- 8: Druckraum
- 9: Ausrückrichtung
- 10: Federpaket
- 11: Abstützfläche des Kolbens
- 12: Axialrichtung
- 13: Abstützgegenfläche der Zentralwelle
- 14: Federbohrung
- 15: Federraum
- 16: erste Lamelle des Lamellenpakets
- 17: radiale Teilungsebene
- 18: erstes Kolbenteil
- 19: zweites Kolbenteil
- 20: Innenbund
- 21: Ring
- 22: äußerer Durchmesserbereich
- 23: innerer Durchmesserbereich
- 24: Durchmesserstufe von 2
- 25: Spannschraube

## Patentansprüche

1. Druckölkupplung (1) mit einem Innenmitnehmer (2) und einem Kupplungsgehäuse (3) und einem zwischen Innenmitnehmer (2) und Kupplungsgehäuse (3) befindlichen Lamellenpaket (4), welches in Einrückrichtung (5) von einer hydraulisch beaufschlagbaren Einheit aus Kolben (6) und Zylinder (7) zusammengepresst und in Ausrückrichtung (9) von einem Federpaket (10) beaufschlagbar ist, wobei zwischen einer dem Lamellenpaket (4) zugewandten Abstützfläche (11) des Kolbens (6) und einer in Axialrichtung (12) gegenüberliegenden Abstützgegenfläche (13) des Innenmitnehmers (2) ein sich bei Bewegung des Kolbens (6) in Einrückrichtung (5) der Druckölkupplung (1) verkürzender Federraum (15) gebildet wird und wobei das Federpaket (10) in diesem Federraum (15) untergebracht ist, **dadurch gekennzeichnet, dass** der Kolben (6) in einer Radialebene (17) geteilt ist und sich die Abstützfläche (11) des Kolbens (6) an dem einen Kolbenteil (18) und sich ein Innenbund (20) an dem anderen Kolbenteil (19) befindet und das Federpaket (10) zwischen der Abstützfläche (11) des Kolbens (6) und dem Innenbund (20) des anderen Kolbenteils (19) gefesselt ist, indem zwischen dem Innenbund (20) des anderen Kolbenteils (2) und dem Federpaket (10) ein verschiebbarer Ring (21) sitzt, der sich mit einem äußeren Durchmesserbereich (22) am Innenbund (20) und mit einem inneren Durchmesserbereich (23) an der Abstützgegenfläche (13) des Innenmitnehmers (2) abstützt.

2. Druckölkupplung (1) nach Anspruch 1, **dadurch gekennzeichnet, dass** die Abstützgegenfläche (13) im axialen Längsbereich zwischen der Abstützfläche (11) des Kolbens (6) und der ersten Lamelle (16) des Lamellenpakets (4) liegt.

3. Druckölkupplung (1) nach Anspruch 1 oder 2, **dadurch gekennzeichnet, dass** das Federpaket (10) in Axialrichtung (12) vorgespannt ist.

4. Druckölkupplung (1) nach einem der Ansprüche 1 bis 3, **dadurch gekennzeichnet, dass** die Abstützgegenfläche (13) an dem Innenmitnehmer (2) von einer sich im Durchmesser verkleinernden Durchmesserstufe (24) des Innenmitnehmers (2) gebildet wird.

5. Druckölkupplung (1) nach einem der Ansprüche 1 bis 4, **dadurch gekennzeichnet, dass** der Kolben (6) zusammen mit dem Federpaket (10) eine einbaufertige Baueinheit mit vorgespanntem Federpaket (10) bildet.

## Claims

1. Hydraulic clutch (1) having an inner drive (2) and a clutch housing (3) and a disk pack (4) which is located between the inner drive (2) and the clutch housing (3) and is compressed in the engagement direction (5) by a unit - which can be impinged upon hydraulically - consisting of a piston (6) and cylinder (7) and can be impinged upon by a spring assembly (10) in the disengagement direction (9), wherein a spring chamber (15) which decreases upon movement of the piston (6) in the engagement direction (5) of the hydraulic clutch (1) is formed between a support surface (11) of the piston (6) facing the disk pack (4) and a support counter surface (13) of the inner drive (2) which is opposite thereto in the axial direction (12), and wherein the spring assembly (10) is accommodated in this spring chamber (15), **characterised in that** the piston (6) is divided in a radial plane (17) and the support surface (11) of the piston (6) is located on one piston part (18) and an inner collar (20) is located on the other piston part (19) and the spring assembly (10) is constrained between the support surface (11) of the piston (6) and the inner collar (20) of the other piston part (19) **in that** a displaceable ring (21) is located between the inner collar (20) of the other piston part (2) and the spring assembly (10) and is supported with an outer diameter region (22) on the inner collar (20) and is supported with an inner diameter region (23) on the support counter surface (13) of the inner drive (2).

2. Hydraulic clutch (1) as claimed in Claim 1, **characterised in that** the support counter surface (13) is located in the axial longitudinal region between the support surface (11) of the piston (6) and the first disk (16) of the disk pack (4).

3. Hydraulic clutch (1) as claimed in Claim 1 or 2, **characterised in that** the spring assembly (10) is biased in the axial direction (12).

4. Hydraulic clutch (1) as claimed in any one of Claims 1 to 3, **characterised in that** the support counter surface (13) is formed on the inner drive (2) by a diameter step (24), which is reduced in the diameter, of the inner drive (2).

5. Hydraulic clutch (1) as claimed in any one of Claims 1 to 4, **characterised in that** the piston (6), together with the spring assembly (10), forms a ready-to-install structural unit having a biased spring assembly (10).

## Revendications

1. Embrayage à huile sous pression (1) avec un organe d'entraînement intérieur (2), un carter d'embrayage (3) et un paquet de lamelles (4) qui se trouve entre l'organe d'entraînement intérieur (2) et le carter d'embrayage (3) et qui est comprimé dans le sens d'embrayage (5) par une unité à commande hydraulique composée d'un piston (6) et d'un cylindre (7) et qui est apte à être contraint dans le sens de débrayage (9) par un bloc-ressort (10), étant précisé qu'il se forme entre une surface d'appui (11) du piston (6) tournée vers le paquet de lamelles (4) et une surface d'appui opposée (13) de l'organe d'entraînement intérieur (2) dans le sens axial (12) un espace de ressort (15) qui diminue lors du mouvement du piston (6) dans le sens d'embrayage (5) de l'embrayage à huile sous pression (1), et que le bloc-ressort (10) est logé dans cet espace de ressort (15), **caractérisé en ce que** le piston (6) est divisé dans un plan radial (17) et la surface d'appui (11) du piston (6) se trouve sur une partie de piston (18) tandis qu'une collerette intérieure (20) se trouve sur l'autre partie de piston (19), et le bloc-ressort (10) est bloqué entre la surface d'appui (11) du piston (6) et la collerette intérieure (20) de l'autre partie de piston (19), grâce au fait qu'il est prévu, calée entre la collerette intérieure (20) de l'autre partie de piston (2) et le bloc-ressort (10), une bague mobile (21) qui s'appuie avec une zone de diamètre extérieure (22) contre la collerette intérieure (20) et avec une zone de diamètre intérieure (23) contre la surface d'appui opposée (13) de l'organe d'entraînement intérieur (2).

2. Embrayage à huile sous pression (1) selon la revendication 1, **caractérisé en ce que** la surface d'appui opposée (13) se trouve dans la zone longitudinale axiale située entre la surface d'appui (11) du piston (6) et la première lamelle (16) du paquet de lamelles (4).

3. Embrayage à huile sous pression (1) selon la revendication 1 ou 2, **caractérisé en ce que** le bloc-ressort (10) est contraint dans le sens axial (12).

4. Embrayage à huile sous pression (1) selon l'une des revendications 1 à 3, **caractérisé en ce que** la surface d'appui opposée (13), sur l'organe d'entraînement intérieur (2), est formée par un épaulement (24) à diamètre réduit de l'organe d'entraînement intérieur (2).

5. Embrayage à huile sous pression (1) selon l'une des revendications 1 à 4, **caractérisé en ce que** le piston (6) forme avec le bloc-ressort (10) une unité de construction prête à monter, avec le bloc-ressort (10) contraint.
